Europäisches Patentamt

European Patent Office

Office européen des brevets

(11) Publication number: **0 125 104**
**B1**

## EUROPEAN PATENT SPECIFICATION

(45) Date of publication of patent specification: **22.02.89**

(51) Int. Cl.⁴: **C 03 B 9/34, C 03 B 9/347**

(21) Application number: **84302966.1**

(22) Date of filing: **02.05.84**

(54) Molds used for blowing glass articles.

(30) Priority: **04.05.83 JP 77547/83**

(43) Date of publication of application:
**14.11.84 Bulletin 84/46**

(45) Publication of the grant of the patent:
**22.02.89 Bulletin 89/08**

(84) Designated Contracting States:
**DE FR GB IT NL**

(56) References cited:
**DE-A-2 911 730**
**FR-A-2 096 839**
**US-A-1 817 046**
**US-A-1 868 421**
**US-A-3 254 981**
**US-A-3 396 002**

(73) Proprietor: **NIPPON ELECTRIC GLASS COMPANY, LIMITED**
**7-1 Seiran 2-chome**
**Otsu-shi Shiga-ken (JP)**

(72) Inventor: **Kusakabe, Masayoshi**
**880-40, Nishiima-cho**
**Hikone-shi Shiga-ken (JP)**

(74) Representative: **Pritchard, Colin Hubert et al**
**Mathys & Squire 10 Fleet Street**
**London EC4Y 1AY (GB)**

EP 0 125 104 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to molds in which glass articles are blown rotationally or non-rotationally.

In production of hollow glass articles, a method of rotationally blowing glass articles in molds has been well known in the prior art. A mold used in such a method is usually referred to as a paste mold as disclosed in U.S. patent No. 3,350,189 and British patent No. 1,084,816, and is provided on its inner molding surface with a lining consisting a paste layer.

The paste layer is porous and can absorb water so that a steam cushion is formed between the glass and the mold due to a high temperature of the glass parison. Thereby, the glass is prevented from directly contacting and sticking to the mold during the blowing operation so that the molded article can be readily released from the mold and has a smooth and glossy surface.

A known typical paste layer is formed by coating a paste on the inner surface of a mold of, such as a cast iron, sticking cork powder onto the paste and baking them to form a carbonized cork layer on the inner surface of the mold. The carbonized cork layer is porous and can absorb and retain water.

However, since a paste layer such as a carbonized cork layer is abraded and burned in use, its water absorption or chargeability is degraded so that the steam cushion formed after prolonged use is insufficient to develop scars and grains on the surface of molded glass article. For this reason, the deteriorated carbonized cork layer should be removed prior to the development of such surface defects and a fresh carbonised cork layer should be formed. Such a paste mold has thus disadvantages that it is low in working ratio and high in maintenance cost.

In addition, such a paste mold has a problem that fine carbonized cork pieces may be stuck firmly to the surface of the molded glass product.

In order to remove those disadvantages of the paste mold, blow molds are proposed in US-A-3.254.981 (which corresponds to Japanese Patent Publication No. 10438/'62) and in Japanese Utility Model Publication No. 9726/'65, wherein the mold is made of a sintered alloy and is provided with no paste layer.

Since a sintered alloy has a high porosity, the sintered alloy mold having no paste layer can retain water in the pores. Accordingly, a steam cushion can be formed between the glass surface and the inner surface of mold during the blowing operation. In addition, since the alloy is exposed to the inner surface of the mold, the mold is subjected to neither abrasion nor damage during the blowing operation so that the working life is drastically extended as compared with a paste mold. The working ratio and the maintenance cost are also improved.

However, in the sintered alloy mold, those pores are formed in a network form by connection of gaps between the sintered alloy grains so that the outer and inner surfaces of the mold are connected through such pores. Hence, the steam formed during the blowing operation leaks through the pores to the exterior of the mold so that sufficient steam cushion cannot be formed between the molded glass surface and the inner surface of the mold. In addition, since the pores are very fine, they are apt to be plugged by hardness components and other fine contaminants in water. This means reduction of the amount of leaking steam, but the water amount absorbed and retained in the pores of the mold is also reduced so that sufficient steam cushion cannot be formed. Furthermore, once the pores are plugged, the mold cannot be reused so that the working life of the mold is shortened. Therefore, the sintered alloy mold is uneconomical in view of the fact that the sintered alloy is expensive.

Still further, since the sintered alloy is brittle, the sintered alloy mold is easily broken.

In production of asymmetric hollow glass articles and articles having a surface pattern, a mold is usually used in the blowing process but no rotation is given to glass parisons.

US-A-1.868.421 discloses a metallic mold for use in blowing an ingot to form an article of pure fused silica. Cavities are provided in the wall of the mold. The mold is not a paste type mold, however, and the cavities are for removing sand adhering to the ingot. The sand fills the cavities and the article has a regular surface free from bosses and without a sand layer on its outer surface.

SU-B-443.001 discloses a mold for producing glass articles. The mold includes a shaping part consisting of a thin-walled metal vessel having a layer of moisture-absorbing material on an outer surface thereof. Through-openings are formed in metallic wall of the vessel. The shaping part is placed in a casing and, in use, the space between the casing and the shaping part is filled with water. Heat from molten glass within the shaping part converts the water to steam, which passes through the moisture-absorbing material and the through-openings to form a layer of steam between the metal wall and the glass melt.

SU-B-631.462 discloses a mold for blowing glass articles in which a forming surface is provided with grooves in the shape of a grid. During operation, the mold is periodically wetted with water. The grooves contribute to the accumulation of moisture.

It is an object of the present invention to provide a mold for blowing glass articles wherein the steam cushion can be reliably formed for an extended working life, and the maintenance can be readily performed.

It is another object of the present invention to provide such a blow mold which is economical and has a sufficient mechanical strength.

According to the present invention there is provided a metallic mold for use in blowing glass articles and having water retaining means in at least an inner molding surface thereof for producing a steam cushion between blown glass and the inner molding surface during the glass blowing process, characterised in that a large number of small depresssions for retaining water so as to generate the steam cushion are mechanically formed in an inner molding surface of said mold, said small depressions being inclined downwardly towards a bottom thereof and distributed over the entirety of said inner molding surface.

Since the inner surface of the mold is a metal surface, neither abrasion nor burning substantially occurs in use so that the mold is remarkably improved as regards its working life and working ratio as compared with known paste molds. As the small depressions are formed by a mechanical technique such as, for example, drilling, any plugging in the depressions can be readily removed so that the mold of the present invention can be reused by simple treatment.

The term "small depressions" used in the present specification means open-topped small cavities such as small holes, small grooves, small channels and the like.

The invention will now be described, by way of example, with reference to the accompanying drawings, in which:-

Fig. 1 is a perspective view of a half member of a mold according to the present invention;

Fig. 2 is a partial sectional view of the half member of Fig. 1; and

Fig. 3 is a perspective view of a half member of another embodiment of the invention.

As known in the prior art as disclosed in the above-mentioned U.S. patent and British patent, a mold is split into two halves which are similar to one another.

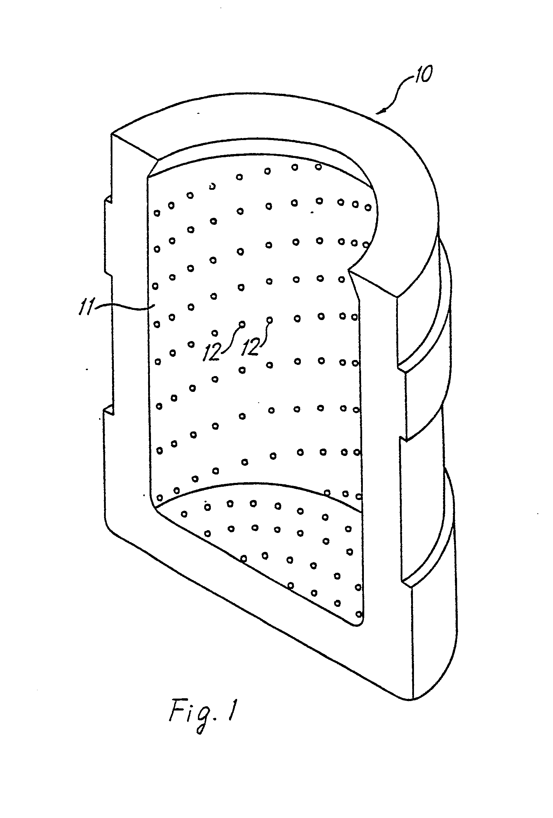

Referring to Fig. 1, a mold 10, only a half member of which is shown therein, is made of a cast iron or other suitable metal.

The inner surface 11 of mold 10 is drilled with a great number of small holes 12 over the entire surface by means of a perforator, such as a drill. etc. Each small hole 12 extends towards the outer surface of the mold and terminates at a position in the wall of mold 10 so that it is not a through hole. The inner surface 11 of mold 10 is not covered with any paste layer and is exposed to the molding cavity of the mold.

In the arrangement of the mold, when water is applied onto the mold prior to blowing operation, water is retained in small holes 12. During blowing operation, the retained water is evaporated due to heat of the glass parison to form steam cushion between the glass surface and the inner surface 11 of mold 10, similar to the known paste mold.

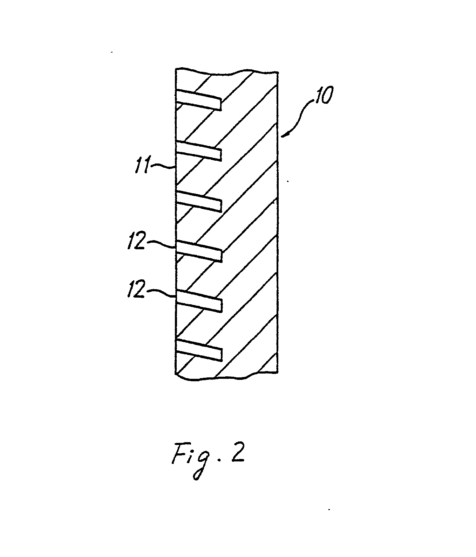

Each hole 12 has, for example, a diameter ranging from 0.5 to 5 mm and a depth from 2 to 15 mm. The number of the small holes 12 ranges from 2 to 20 per 5 $cm^2$ of the inner surface 11. In order to improve the retention of water in small holes 12, each hole 12 is preferably inclined downwardly towards a bottom thereof, as shown in Fig. 2.

When water is applied onto the mold, water flows down along the inner surface 11 of mold 12 so that water is not sufficiently retained in holes in the upper area of the inner surface 11 as compared with the lower area. Therefore, it is desired to form a uniform steam cushion that small holes are formed at a comparatively high density in the upper area.

Furthermore, the small holes 12 are not arranged on a same level but preferably on various levels in order to form a uniform steam cushion. In the embodiment of Fig. 1, the small holes are arranged on an imaginary helical line extending along the inner surface 11 from an upper portion to a lower portion in the rotating direction of parison during the blowing operation.

Blowing operation using mold 10 is carried out in a similar manner to that using a conventional paste mold. Namely, two half members of mold 10 are secured to a molding machine and water is flashed onto the inner surface 11 of mold 10, thereby retaining water in the small holes 12. Then, a high temperature glass parison is charged into mold 10 and blown with air while rotating it to expand the parison to the inner surface 11 of mold to shape a glass article. At that time, the water retained in small holes 12 is evaporated due to the heat of the high temperature parison to form steam cushion between inner surface 11 of mold 10 and the glass surface, thereby preventing the direct contact of glass with the inner surface 11 of mold 10. As a result, glass articles having smooth and glossy surface can be produced.

Since the mold 10 is made of metal and has no paste layer, the inner molding surface 11 and other portions are substantially subjected to neither abrasion nor burning during the blowing operation so that the working ratio is remarkably improved. Moreover, even if the small holes 12 are plugged, the plugged foreign materials can be readily removed from the holes 12 because the holes are mechanically drilled. Therefore, the mold can be reused conveniently.

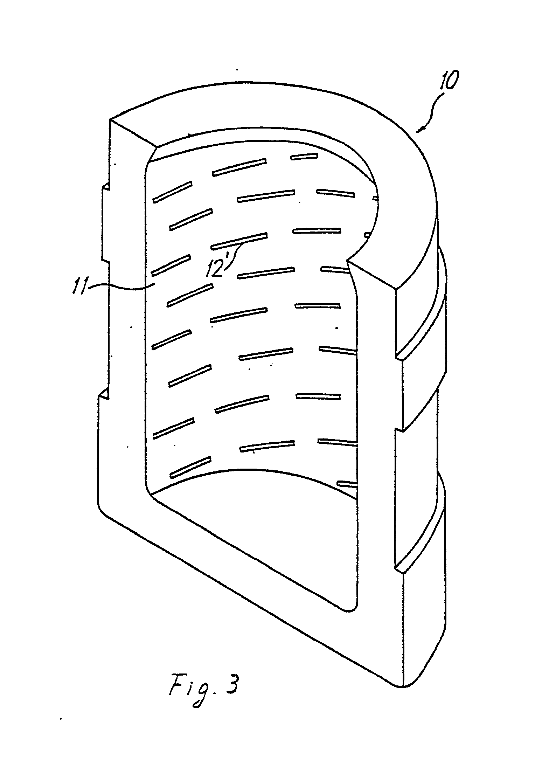

In the above mentioned embodiment, small round holes 12 are formed in the inner surface of the mold as the small depressions. But, the small depressions may have any other cross-section. and may be discontinuous elongated grooves 12' as shown in Fig. 3.

In the above-mentioned embodiments, the mold is made of a casted metal, but it may be made of a sintered alloy which is porous. In the case, a great number of small depressions are formed in the inner surface of the sintered metal mold according to the present invention and water is retained in the depressions. Therefore, even if pores of the sintered alloy are plugged, the mold can be used as it is.

This invention has been described in connection with a mold for rotationally blowing glass articles, but the present invention can be also applied to a mold for stationarily blowing asymmetric glass articles having no surface pattern so as to obtain such glass articles having smooth and glossy surface.

**Claims**

1. A metallic mold (10) for use in blowing glass articles and having water retaining means (12, 12') in at least an inner molding surface (11) thereof for producing a steam cushion between blown glass and the inner molding surface (11) during the glass blowing process, characterised in that a large number of small depressions (12, 12') for retaining water so as to generate the steam cushion are mechanically formed in an inner molding surface (11) of said mold (10), said small depressions (12, 12') being inclined downwardly towards a bottom thereof and distributed over the entirety of said inner molding surface (11).

2. A mold as claimed in claim 1, characterised in that said small depressions (12, 12') are formed on an imaginary helical line extending along said molding surface (11) from an upper portion to a lower portion thereof.

3. A mold as claimed in claim 1, characterised in that the density of said small depressions (12, 12') is higher in an upper portion of said molding surface than in a lower portion thereof.

4. A mold as claimed in claim 1, wherein said small depressions (12, 12') are small round holes.

5. A mold as claimed in claim 1, wherein said small depressions (12, 12') are small grooves (12').

**Patentansprüche**

1. Metallische Form (10), die zum Blasen von Glasartikeln verwendet wird und an wenigstens einer inneren Formungsoberfläche (11) Wasserhalteeinrichtungen (12, 12') aufweist, um während des Glasblasvorganges ein Dampfpolster zwischen geblasenem Glas und der inneren Formungsoberfläche (11) herzustellen, gekennzeichnet durch eine große Anzahl kleiner Vertiefungen (12, 12') zum Halten von Wasser, so daß das Dampfpolster mechanisch in einer inneren Formungsoberfläche (11) dieser Form (10) gebildet wird, wobei diese kleinen Vertiefungen (12, 12') nach unten in Richtung auf deren Boden geneigt und über die gesamte innere Formungsoberfläche (11) verteilt sind.

2. Form nach Anspruch 1, dadurch gekennzeichnet, daß die kleinen Vertiefungen (12, 12') auf einer imaginären schraubenförmigen Linie geformt sind, die sich entlang der genannten Formungsoberfläche (11) von deren oberem Teil zu deren unterem Teil erstreckt.

3. Form nach Anspruch 1, dadurch gekennzeichnet, daß die Dichte dieser kleinen Vertiefungen (12, 12') in einem oberen Teil dieser Formungsoberfläche größer ist als in einem unteren Teil davon.

4. Form nach Anspruch 1, dadurch gekennzeichnet, daß die kleinen Vertiefungen kleine runde Löcher (12) sind.

5. Form nach Anspruch 1, dadurch gekennzeichnet, daß die kleinen Vertiefungen kleine Nuten (12') sind.

**Revendications**

1. Moule métallique (10) destiné à être utilisé pour le soufflage d'articles de verre et comportant des moyens de rétention d'eau (12, 12') dans au moins une surface de moulage intérieure (11) de celui-ci pour produire un coussin de vapeur entre le verre soufflé et la surface de moulage intérieure (11) pendant le processus de soufflage du verre, moule caractérisé en ce qu'un grand nombre de petites dépressions (12, 12') de rétention d'eau permettant de produire le coussin de vapeur, sont formées mécaniquement dans une surface de moulage intérieure (11) du moule (10) ces petites dépressions (12, 12') étant inclinées vers le bas en direction du fond du moule, et se trouvant réparties sur la totalité de la surface de moulage intérieure (11).

2. Moule selon la revendication 1, caractérisé en ce que les petites dépressions (12, 12') sont formées sur une ligne en hélice imaginaire s'étendant le long de la surface de moulage (11) depuis une partie supérieure jusqu'à une partie inférieure de celle-ci.

3. Moule selon la revendication 1, caractérisé en ce que la densité des petites dépressions (12, 12') est plus élevée dans la partie supérieure de la surface de moulage que dans la partie inférieure de celle-ci.

4. Moule selon la revendication 1, caractérisé en ce que les petites dépressions (12, 12') sont de petits trous ronds.

5. Moule selon la revendication 1, caractérisé en ce que les petites dépressions (12, 12') sont de petites rainures (12').

Fig. 1

Fig. 2

Fig. 3